# EUROPEAN PATENT SPECIFICATION

(11) **EP 3 211 257 B1**
(45) Date of publication and mention of the grant of the patent: **24.07.2019**
(21) Application number: 17156433.9
(22) Date of filing: 16.02.2017
(51) Int. Cl.: F16C 13/00, F16C 35/067, F16H 53/06, F16C 19/54

(54) **CAM FOLLOWER WITH TIRE HAVING MEANS TO PREVENT AXIAL MOVEMENT**
NOCKENFOLGER MIT REIFEN, DER MITTEL ZUM VERHINDERN VON AXIALBEWEGUNGEN AUFWEIST
GALET DE CAME À PNEU POSSÉDANT DES MOYENS POUR PRÉVENIR DE MOUVEMENT AXIAL

(30) Priority: 17.02.2016 US 201615046158
(43) Date of publication of application: 30.08.2017
(73) Proprietor: Roller Bearing Company of America, Inc., Oxford, CT 06478 (US)
(72) Inventor: PALLINI, Robert A., Cheltenham, PA Pennsylvania 19012 (US); SMITH, Bradley T., Glastonbury, CT Connecticut 06033 (US)
(74) Representative: Bjerkéns Patentbyrå KB (Stockholm)

(56) References cited:
- EP-A2- 2 541 083
- US-A- 5 414 784
- US-A1- 2008 011 119
- US-A1- 2015 101 387

## Description

### FIELD OF THE INVENTION

The present invention is generally directed to a cam follower for a ram of a metal can production necker. More specifically, the present invention is directed to a bearing assembly according to the preamble of claim 1.

### BACKGROUND OF THE INVENTION

Metal cans are often produced as two piece cans which comprise a cylindrical can body with an integral bottom wall and a can top. The can is typically made from aluminum. Typically, curved sections are formed at the bottom and top of the can to increase its structural integrity. A can making machine, sometimes referred to as a necker, forms the curved sections of the can by progressively squeezing, i.e. necking, the can body between opposing ram bodies which squeeze the can. The ram typically includes one or more cam followers extending therefrom. The cam followers ride on a cam that is mounted on a cylinder. As the ram rotates about the cylinder, the cam follower rides on the cam, which is configured to move the ram back and forth.

Typically, the cam is inserted into a tire to enhance operation thereof. The tire facilitates a smooth transition of force between the cam and the remaining portion of the cam follower. Moreover, the tire inhibits wear of the cam, the remaining portion of the cam follower, the ram, and, more generally, the necker machine. A disadvantage of known cam followers for rams of necker machines is that over time and with extended use, the tire tends to shift axially relative to the remaining portion of the cam follower, and more specifically the outer ring. If this problem is not corrected, it can lead to reduced performance of the necker machine, and can further require unscheduled or more frequent maintenance or repair.

Cam followers can include two bearings (e.g., roller or ball bearings) mounted adjacent to one another on a stud. The bearings have a predetermined first axial width and a first manufacturing tolerance of plus or minus a fraction of the first axial width. When two of the bearings are assembled on the stud adjacent to one another the combined axial width of the two bearings has a "stack-up" tolerance that depends on the individual tolerances (e.g., first manufacturing tolerances) of each of the bearings. The two bearings are typically installed between two radially inward projecting shoulders of the tire in which outer rings of the bearings are disposed. The tire has a second axial width defined between the shoulders. The second axial width has a second manufacturing tolerance of plus or minus a fraction of the second axial width. Thus, when the first manufacturing tolerance of the bearings is on the low end and the second axial tolerance of the tire is on the high end, the combined axial width of the two bearings could be less than the second axial width between the shoulders. This creates an axial gap between an axial inward portion of the shoulder and the adjacent bearing. This axial gap allows the tire to move axially on the bearings. Such axial movement of the tire relative to the bearings could cause premature failure of the cam follower.

US 2008/0011119 discloses a cam or rail follower having a shaft, a rotational inner portion rotating about the shaft, and an outer racer rotating about the shaft, the outer racer being constructed from a self-lubricating material. A system having a cam follower including a shaft and an outer racer, the outer racer being constructed from a self-lubricating material and a cam, the outer racer of the cam follower being in contact with the cam, the contact causing the outer racer to rotate about the shaft of the cam follower, the self lubricating material being softer than a material used to construct the cam. The cam follower includes two ball bearings mounted between two radially inward projecting shoulders of the outer racer. One of the shoulders comprises an outwardly facing chamfer. The bearings are inserted through the chamfered end of the outer racer.

US 5,414,784 discloses an axial retention of a roller bearing in a support part comprises a stop shoulder, disposed at an elastically or flexurally widenable portion of the support part. When the roller bearing is pressed into the support part, the portion widens. After the roller bearing has been pushed up to the shoulder, a reverse or return deformation of the portion occurs, so that the stop shoulder forms the axial retention for the roller bearing.

Thus, there exists a need to accommodate such manufacturing tolerances and to provide a cam follower in which axial movement of the tire relative to the bearings is reduced or eliminated.

### SUMMARY OF THE INVENTION

The present invention resides in a bearing assembly for a cam follower assembly for a ram assembly for a metal can production necker as defined in claim 1.

There is disclosed herein a bearing assembly for a cam follower assembly for a ram assembly for a metal can production necker that includes two or more roller or ball bearings. Each of the roller or ball bearing includes an inner ring positioned within an outer ring and a plurality of rolling elements positioned therebetween. The bearing assembly includes a tire press fit on the outer rings of the roller or ball bearings. The tire has an elongate body portion that extends between a first radially inward projecting shoulder and a second radially inward projecting shoulder. A radially inward facing surface extends between the first radially inward projecting shoulder and the second radially inward projecting shoulder. The first radially inward projecting shoulder extends further radially inward than the second radially inward projecting shoulder. The second radially inward projecting shoulder has an inwardly facing sloped abutment surface.

In one embodiment, the outer rings of the roller or ball bearings are axially compressed between the first radially inward projecting shoulder and the second radially inward projecting shoulder.

### DESCRIPTION OF THE DRAWINGS

FIG. 1 is partial cross sectional view of a cam follower in accordance with an illustrative embodiment of the present disclosure;
FIG. 2 is an end view of the cam followers shown in FIGS. 1 and taken across line 2-2;
FIG. 3 is a perspective view of a ram of the present disclosure in which two cam followers are coupled thereto;
FIG. 4 is a front view of the ram shown in FIG. 3;
FIG. 5 is cross sectional view of a cam follower in accordance with another illustrative embodiment of the present disclosure
FIG. 6A is a cross sectional view of the outer ring and the tire shown in an as manufactured state prior to assembly;
FIG. 6B is a cross sectional view of the outer ring in an as manufactured state and the tire shown in an as heated state prior to assembly;
FIG. 7 is a front view of a spilt ring embodiment of a retaining ring;
FIG. 8 is an enlarged view of the groove and retaining ring portion of the cam follower of FIG. 5;
FIG. 9 is partial cross sectional view of a cam follower with a bearing assembly in accordance with the present invention;
FIG. 10 is an enlarged view of a portion of the bearing outer ring and tire of FIG. 9; and
FIG. 11 is an enlarged and segmented view of a portion of the tire of FIG. 10.

### DETAILED DESCRIPTION OF THE INVENTION

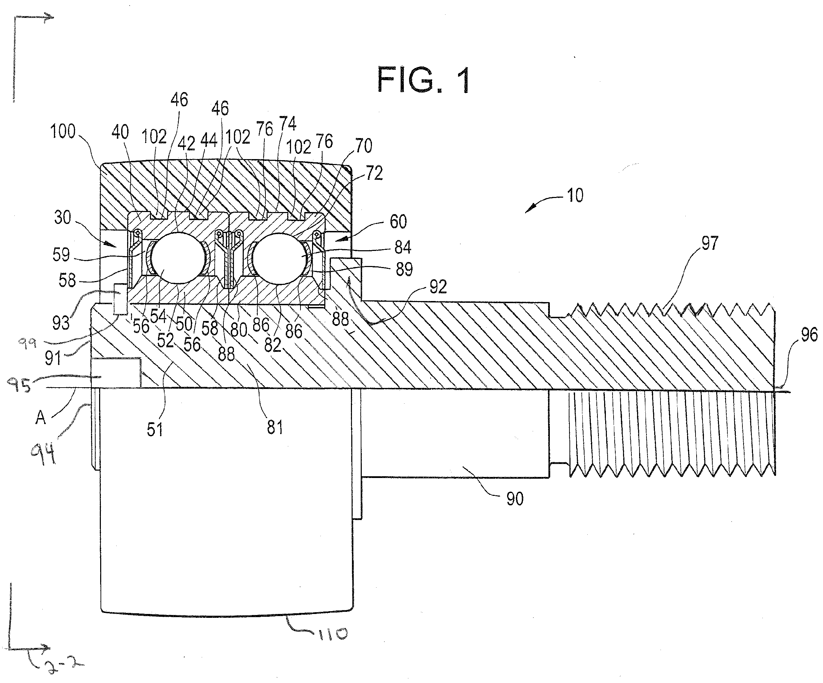

As shown in FIGS. 1-2, a cam follower for a ram of a necker machine is shown and is generally designated by the reference numeral 10. The cam follower 10 includes a first bearing 30 (e.g., a roller or ball bearing) and a second bearing 60 (e.g., a roller or ball bearing). The first bearing 30 and the second bearing 60 are configured in a tandem configuration; that is, they are side to side. In the embodiment shown, the first bearing 30 and the second bearing 60 abut each other and are coaxial about a first axis of rotation A.

The first bearing 30 comprises a first outer ring 40 having a first outer race 42, also referred to as a bearing surface, and a first exterior surface 44. The first bearing 30 further includes a first inner ring 50 having a first inner race 52, also referred to as a bearing surface. The first inner ring 50 is coaxially disposed in the first outer ring 40. A plurality of balls 54 are disposed between the first outer race 42 and the first inner race 52. The plurality of balls 54 are in rolling engagement with the first outer race 42 and the first inner race 52 so that the first outer ring 40 is rotatable relative to the first inner ring 50 about the first axis of rotation A.

The first bearing 30 comprises an interior set of seals 56 extending radially between the first outer ring 40 and the first inner ring 50 on either side of the first plurality of balls 54. The first bearing 30 further comprises an exterior set of seals 58 extending radially between the first outer ring 40 and the first inner ring 50 axially outside of the interior set of seals 56. The interior and exterior seals 56, 58 are configured to retain a lubricant inside an annular cavity 59 formed between the first outer race 42 and the first inner race 52 in which the first plurality of balls 54 is disposed. In the embodiment shown, the seals 56, 58 comprise a low carbon steel, however, as can be appreciated by a person having ordinary skill in the art and familiar with this disclosure, the seals 56, 58, also referred to as shields, can comprise many different materials.

In the embodiment disclosed in FIG. 1, the second bearing 60 is similar in configuration to the first bearing 30. The second bearing 60 comprises a second outer ring 70 having a second outer race 72, also referred to as a bearing surface, and a second exterior surface 74. The second bearing 60 further includes a second inner ring 80 having a second inner race 82, also referred to as a bearing surface. The second inner ring 80 is coaxially disposed in the second outer ring 70. A second plurality of balls 84 are disposed between the second outer race 72 and the second inner race 82. The plurality of balls 84 are in rolling engagement with the second outer race 72 and the second inner race 82 so that the second outer ring 70 is rotatable relative to the second inner ring 80 about the first axis of rotation A.

The second ball bearing 60 comprises an interior set of seals 86 extending radially between the second outer ring 72 and the second inner ring 82 on either side of the second plurality of balls 84. The second bearing 60 further comprises an exterior set of seals 88 extending radially between the second outer ring 72 and the second inner ring 82 axially outside of the interior set of seals 86. The seals 86, 88 are configured to retain a lubricant inside an annular cavity 89 formed between the second outer race 72 and the second inner race 82 in which the second plurality of balls 84 are disposed. In the embodiment shown, the seals comprise a low carbon steel, however, as can be appreciated by a person having ordinary skill in the art and being familiar with this disclosure, the seals 86, 88, also referred to as shields, can comprise many different materials.

In reference to the embodiment shown in FIGS. 1-2, although the cam follower 10 comprises a first bearing 30 (e.g., a roller or ball bearing) and a second bearing 60 (e.g., a roller or ball bearing), the present disclosure is not limited in this regard and, as will be appreciated by a person of ordinary skill in the art, many different configurations may be employed. For example, a cam follower having a single row ball or roller bearing may be used. Or, for example, a cam follower having a roller or ball bearing wherein a single continuous outer ring defines a first outer race and a second outer race, and a single continuous inner ring defines a first inner raceway and a second inner raceway may be used.

In the embodiment shown in FIGS. 1-2, the outer rings 40, 70 and the inner rings 50, 80 comprise 52100 steel that is through hardened. The first plurality of balls 54 and the second plurality of balls 84 also comprise 52100 steel. In the embodiment shown, the balls 54, 84 are separated by a cage, as is commonly known in the art (not shown in the FIGS.). The cage comprises low carbon soft steel. It should be understood that the present disclosure is not limited to a cage, since different spacers, or no spacers, may be employed between the balls in the first plurality of balls 54 and the second plurality of balls 84. It should also be understood that the present disclosure is not limited to balls, since other types of rolling elements may be employed, for example, needle rollers. Although specific materials are disclosed herein, a person of ordinary skill in the art and familiar with this disclosure will understand that the present disclosure is not limited in this regard, and that other materials may be used.

In reference to FIGS. 1-2, the first inner ring 50 comprises a first bore 51 extending therethrough, and the second inner ring 80 comprises a second bore 81 extending therethrough. A shaft 90 is received through the first bore 51 and the second bore 81. In the embodiment shown in FIGS. 1-2, the shaft 90 is press-fit in the first bore 51 and the second bore 81 so that the first inner ring 50 and the second inner ring 80 are fixed relative to the shaft about the first axis of rotation A. The shaft 90, also referred to as a stud, extends between a first end 91 and a second end 96. The first bearing 30 and the second bearing 60 are received on the shaft 90 proximate to the first end 91 thereof. The shaft comprises a shoulder 92 projecting radially from the shaft between the first end 91 and the second end 96. After the second bearing 60 is received on the shaft 90 the second inner ring 80 abuts the shoulder 92 to inhibit axial movement of the bearings 30, 60 relative to the shaft 90. After the bearings 30, 60 are disposed on the shaft 90 and the second inner ring abuts the shoulder 92, a retainer ring 93 is fixedly received in a groove 99 on the shaft 90 proximate to the first end 91 so the first bearing 30 and the second bearing 60 are disposed axially between the retainer ring 93 and the shoulder 92 to thereby inhibit axial movement of the bearings relative to the shaft.

The shaft 90 includes a face 94 at the first end 91 perpendicular to the first axis of rotation A. The face 94 comprises a recessed hexagonal socket 95 configured to receive a hex wrench (or the like) for rotating the shaft 90 about the first axis of rotation A. The shaft 90 further includes a plurality of threads 97 on a radial outside surface of the shaft 90. In this way, the shaft 90 can be received in a bore (not shown in the FIGS. 1-2) comprising a complementary thread pattern, or can similarly be received in a nut or the like having a complementary thread pattern.

The first bearing 30 and the second bearing 60 are received in a tire 100. The tire 100 has an outside surface 110. The outside surface 110 engages the cam (not shown in FIGS. 1-2) during operating of the necker. The first exterior surface 44 and the second exterior surface 74 each have a plurality of grooves 46, 76 extending along a circumference of the outer rings 40, 70 in a plane perpendicular to the first axis of rotation A. In the embodiment shown, each outer ring 40, 70 includes two grooves 46, 76 in its exterior surface 44, 74. It should be understood, however, that different configurations may be employed with the present disclosure. For example, each exterior surface 44, 74 may have more than two grooves 46, 76, or the first exterior surface 44 may have a single groove 46, while the second exterior surface 74 does not include any grooves. In the embodiment shown, the grooves 46, 76 are machined into the exterior surfaces 44, 74.

A portion 102 of the tire 100 is disposed in each groove 46, 76. This interface between the portion 102 of the tire 100 and the grooves 46, 76 inhibits axial movement of the tire 100 relative the bearings 30, 60 thereby improving the performance of the cam follower 10.

It should be understood that while the interface between the tire 100 and the exterior surfaces 44, 74 is defined as the exterior surfaces having grooves 46, 76 in which a portion 102 of the tire 100 is disposed therein to inhibit axial movement of the tire 100 relative to the bearings 30, 60, the present disclosure is not limited in this regard. For example, the exterior surfaces 44, 74 may comprise one of more circumferential protuberances. In a similar fashion, portions of the tire surround the protuberances, thereby inhibiting axial movement of the tire relative to the bearings 30, 60.

In the disclosed embodiments, the tire 100 is molded onto the bearings 30, 60. The ball bearings 30, 60 are disposed in a mold configured to form a tire 100 about the first and second outer rings 40, 70. A molding material is injected into the mold and is then cured about the outer rings 40, 70 to form the tire 100. In the embodiment shown, the mold material is molten nylon, although, it should be understood that many different molding materials may be used with the present invention. During the molding process, the molding material solidifies in the grooves 46, 76, so that the portion 102 of the tire 100 is disposed in the grooves 46, 76. In this manner, the interface of the grooves 46, 76 and the portion 102 of the tire 100 disposed therein inhibits axial movement of the tire relative to the bearings 30, 60. In the embodiment shown, the outside surface 110 of the tire 100 is crowned to facilitate the rolling of the cam follower 10 relative to the cam (not shown) during operation of the necker.

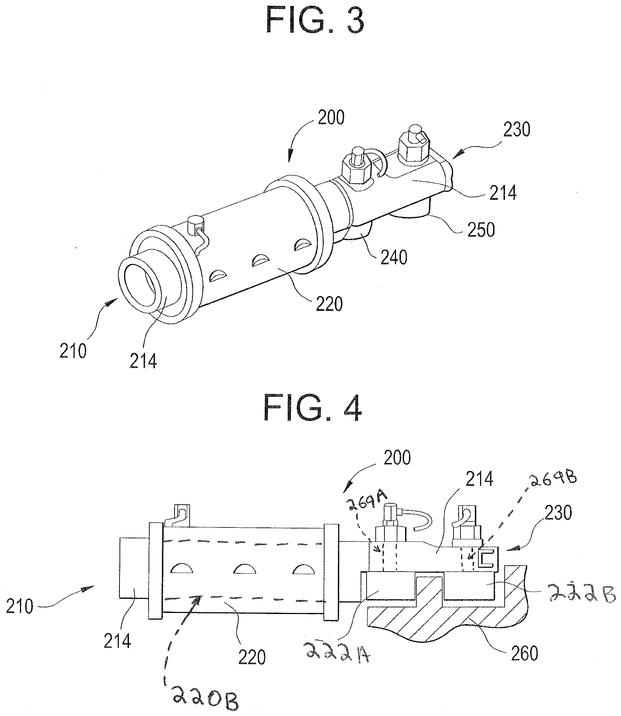

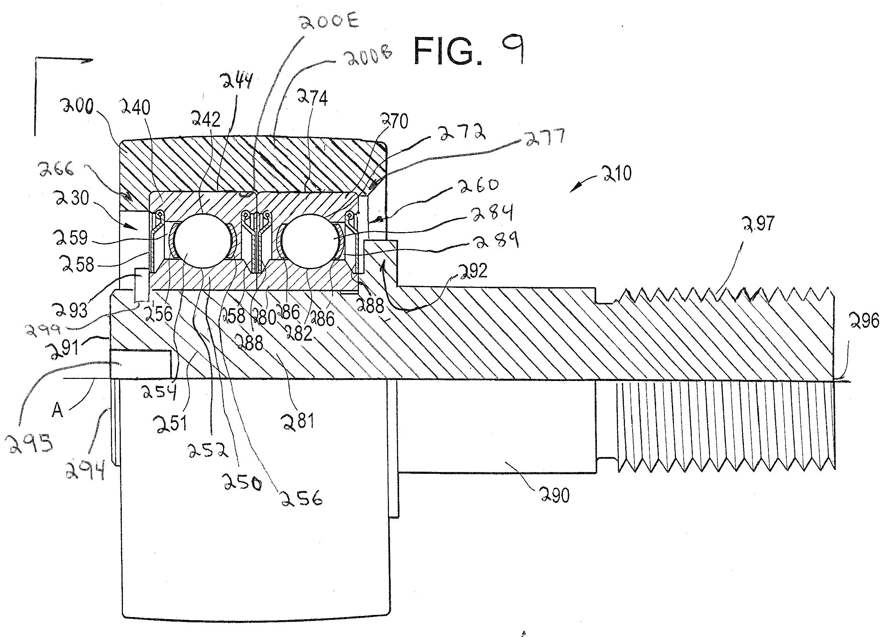

In reference to FIGS. 3 and 4 a ram assembly 200 for a necker machine (not shown) in accordance with the present disclosure is shown. In such a can making necker machine, a cam follower usually rides on a stationary cam with the rotational axis parallel to the cam's surface. The ram assembly 200 extends between a first end 210 and a second end 230. The ram assembly 200 includes a fixed bushing 220 having a bore 220B extending therethrough between the first end 210 and the second end 230. A ram piston 214 extends through either end of the bore 220B of the fixed bushing 220. Proximate to the second end of the ram 230, two cam followers 222A, 222B (similar to the cam follower 10 illustrated in FIGS. 1-2 and the cam follower 210 illustrated in FIGS. 9-11 and described in detail herein) extend through bores 269 A and 269B and extend radially therefrom. The cam followers 222A, 222B ride on a surface of a cam 260, one 222A, 222B on each side of the cam 260, at the same time they are rotating around the cam's axis. The ram 214 is moved back and forth by the attached cam followers 222A, 222B in an accelerating and decelerating movement following a profile of the cam 260. Considerable radial force is developed on the cam follower 222A, 222B during the can necking operation.

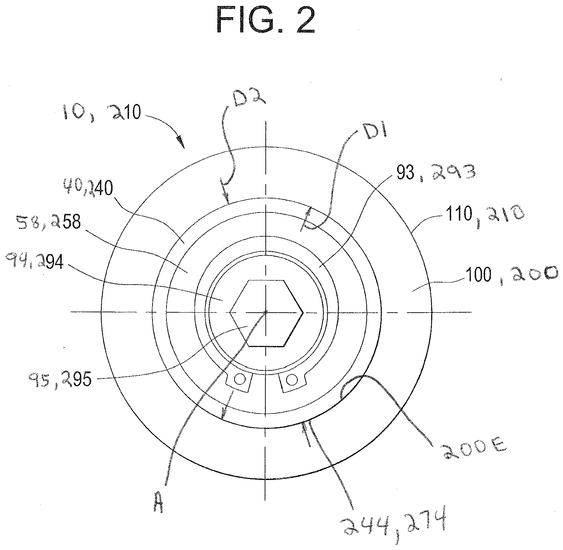

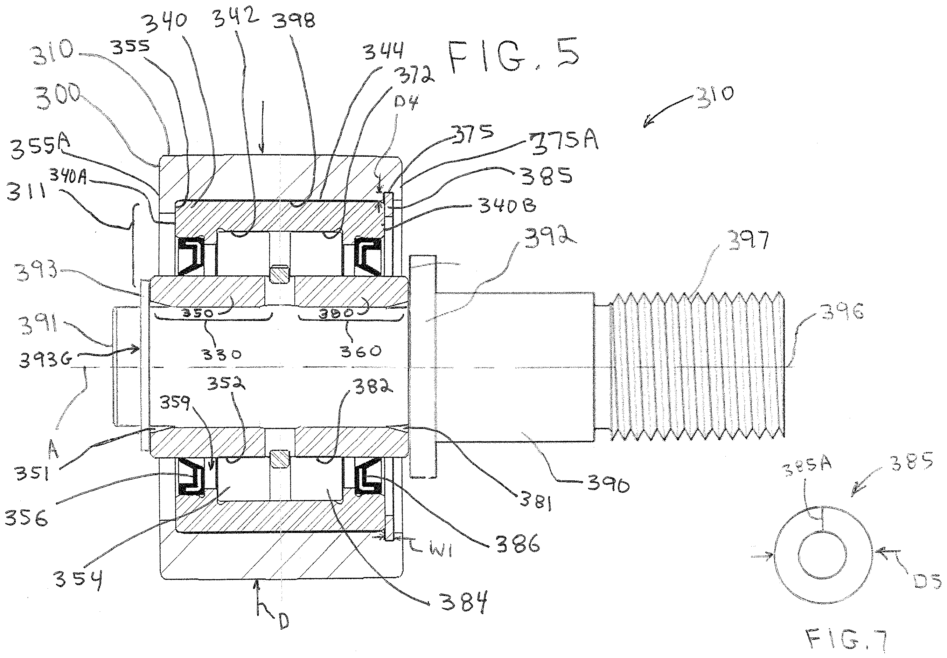

As shown in FIG. 5, a cam follower 310 is similar to the cam follower 10 of FIGS. 1 and 2. Therefore, similar elements are assigned similar reference numbers preceded by the numeral 3. The cam follower 310 includes a double row bearing 311 having a first bearing section 330 and a second bearing section 360. The first bearing section 330 and the second bearing section 360 are configured in a tandem configuration; that is, they are axially side to side. In the embodiment shown, the first bearing section 330 and the second bearing section 360 are axially fixed relative to each other about a first axis of rotation A.

The first bearing section 330 and the second bearing section 360 share a common outer ring 340 having a first outer race 342 and a second outer race 372, each also referred to as a bearing surface. The common outer ring 340 has an exterior surface 344. The first bearing section 330 further includes a first inner ring 350 having a first inner race 352, also referred to as a bearing surface. The first inner ring 350 is coaxially disposed in the common outer ring 340. A plurality of rolling elements 354 (e.g., needle rollers or balls) are disposed between the first outer race 342 and the first inner race 352. The plurality of rolling elements 354 are in rolling engagement with the first outer race 342 and the first inner race 352 so that the common outer ring 340 is rotatable relative to the first inner ring 350 about the first axis of rotation A.

The first bearing section 330 has an annular seal 356 extending radially between the first common outer ring 340 and the first inner ring 350. The seal 356 is configured to retain a lubricant inside an annular cavity 359 formed between the common outer ring 340 and the first inner ring 350 in which the first plurality of rolling elements 354 is disposed. In the embodiment shown, the seal 356 has a C-shaped cross section facing axially outward and is manufactured from a resilient material such as rubber.

In the embodiment disclosed in FIG. 5, the second bearing section 360 is similar in configuration to the first bearing section 330. The second bearing section 360 shares the common outer ring 340 via the second outer race 372. The second bearing section 360 further includes a second inner ring 380 having a second inner race 382, also referred to as a bearing surface. The second inner ring 380 is coaxially disposed in the common outer ring 340. A second plurality of rolling elements 384 (e.g., needle rollers or balls) are disposed between the second outer race 372 and the second inner race 382. The plurality of rolling elements 384 are in rolling engagement with the second outer race 372 and the second inner race 382 so that the common outer ring 340 is rotatable relative to the second inner ring 380 about the first axis of rotation A.

The second bearing section 360 has a seal 386 extending radially between the common outer ring 340 and the second inner ring 380. The seal 386 is configured to retain a lubricant inside an annular cavity 389 formed between the common outer ring 340 and the second inner race 382 in which the second plurality of rolling elements 384 is disposed. In the embodiment shown, the seal 386 has a C-shaped cross section facing axially outward and is manufactured from a resilient material such as rubber.

Although the illustrative cam follower 310 shown in FIG. 5 has the first bearing section 330 and second bearing section 360, the present disclosure is not limited in this regard and, as will be appreciated by a person of ordinary skill in the art, many different configurations may be employed. For example, a cam follower having a single row of balls may be used. Or, for example, a cam follower having a bearing wherein a two piece split outer ring defines a first outer race and a second outer race, and a single continuous inner ring defines a first inner raceway and a second inner raceway may be used.

In the embodiment shown in FIG. 5 the common outer ring 340 and the inner rings 350, 380 comprise 52100 steel that is through hardened. The first plurality of rolling elements 354 and the second plurality of rolling elements 384 also comprise 52100 steel. In the embodiment shown, each of the rolling elements 354 and each of the rolling elements 384 are separated by a respective cage, as is commonly known in the art (not shown in the FIGS.). The cage comprises low carbon soft steel. It should be understood that the present disclosure is not limited to a cage, as different spacers, or no spacers, may be employed between the balls in the first plurality of rolling elements 354 and the second plurality of rolling elements 384. It should also be understood that the present disclosure is not limited to rolling elements, as lubricious liners may be employed. Although specific materials are disclosed herein, a person of ordinary skill in the art and familiar with this disclosure will understand that the present disclosure is not limited in this regard, and that other materials may be used.

In reference to FIG. 5, the first inner ring 350 comprises a first bore 351 extending therethrough, and the second inner ring 380 comprises a second bore 381 extending therethrough. A shaft 390 is received through the first bore 351 and the second bore 381. In the embodiment shown in FIG. 5, the shaft 390 is press-fit in the first bore 351 and the second bore 381 so that the first inner ring 350 and the second inner ring 380 are axially fixed relative to the shaft 390 about the first axis of rotation A. The shaft 390, also referred to as a stud, extends between a first end 391 and a second end 396. The first bearing section 330 and the second bearing section 360 are received on the shaft 390 proximate to the first end 391 thereof. The shaft 390 has a shoulder 392 projecting radially from the shaft 390 at a position between the first end 391 and the second end 396. After the second bearing section 360 is received on the shaft 390 the second inner ring 380 abuts the shoulder 392 to inhibit axial movement of the first and second bearing sections 330 and 350 relative to the shaft 390. After the first and second bearing sections 330 and 350 are disposed on the shaft 390 and the second inner ring 380 abuts the shoulder 392, a retainer ring 393 (e.g., snap ring) is removably secured in a groove 393G on the shaft 390 proximate to the first end 391 so the first bearing section 330 and the second bearing section 350 are disposed axially between the retainer ring 393 and the shoulder 392 to thereby inhibit axial movement thereof relative to the shaft 390.

The shaft 390 includes a face at the first end 391 perpendicular to the first axis of rotation A. The face is similar to the face 94 shown in FIG. 2 and includes a recessed hexagonal socket similar to the hexagonal socket 95 shown in FIG. 2. The shaft 390 further includes a plurality of threads 397 on a radial outside surface of the shaft 390. In this way, the shaft 390 can be received in a bore (e.g., such as the bore 269A or 269B illustrated in FIG. 4) comprising a complementary thread pattern, or can similarly be received in a nut or the like having a complementary thread pattern.

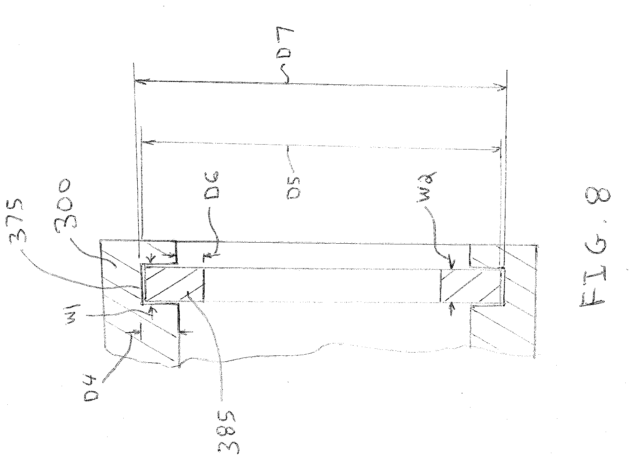

The first bearing section 330 and the second bearing section 360 are received in a tire 300. The tire 300 has an outside surface 310. The outside surface 310 engages the cam (e.g., cam 260 shown in FIG. 4) during operating of the necker. The tire 300 has an inner surface 398 extending from a shoulder 355 which extends radially inward proximate a first end 355A of the tire 300. The tire 300 has a radially outwardly extending groove 375 formed therein proximate a second axial end 375A of the tire 300. As best shown in FIG. 8, the groove 375 has a width W1 of about 0.030 inches to about 0.035 inches (0,76 mm to 0.89 mm) and a depth D4 of about 0.025 inches to about 0.035 inches (0.64 mm to 0.89 mm). The groove 375 has an inside diameter D7 of 1.420 inches (36.1 mm).

The tire 300 is interference fit over the exterior surface 344 of the common outer ring 340 so that the inner surface 398 frictionally engages the exterior surface 344. In particular, the exterior surface 344 has a roughness of 125 micro inches (3.18 µm) RMS minimum. A locking device or mechanism, for example, a retaining ring 385 is snap fit into the groove 375 so that a portion of the retaining ring 385 extends radially out of the groove 375, from the inner surface 398 by a distance D6, as shown in FIG. 8. The tire 300 is secured axially on the common outer ring 340 so that one axial end 340A of the common outer ring 340 engages the shoulder 355 and a second axial end 340B of the common outer ring 340 engages the portion of the retaining ring 375 that extends radially out of the groove 375.

The retaining ring 385 has a thickness W2 and an outside diameter D5. The inventors have conducted significant testing and experimentation to arrive at a suitable dimensional relationship between the size of the groove 375, including the width W1, the depth D4 and the inside diameter D7 and the size of the retaining ring 385 including the width W2, the outside diameter D5 and the distance D6 which the retaining ring extends from the inner surface 398, so that the retaining ring 385 does not wear into and degrade the tire 300. In particular, the inventors have found that the following dimensional relationship is preferable for minimizing such wear: In one embodiment the retaining ring 385 has a radially split 385A therein, as shown in FIG. 7.

The tire 300 is a composite material such as but not limited to an acetal homopolymer, for example Delrin® manufactured by E. I. du Pont de Nemours and Company. The acetal homopolymer is made from a highly-crystalline polymer that has high stiffness and strength compared to copolymers. For example, homopolymers have a tensile strength of 690kgf/cm² (67.7 N/mm²) while copolymers have a tensile strength of 610kgf/cm² (59.8 N/mm²). As used herein, synthetic high polymers have structure which consists of repeated monomer units connected each other with chemical bonds and a monomer is a unit component for forming a high polymer. If a polymer consists of only one kind of monomer then it is referred to herein as a homopolymer, while a polymer which consists of more than one kind of monomer it is referred to herein as a copolymer. In addition, the inventors have selected homopolymers for a material for the tire 300 because homopolymers have a higher melting point (i.e., 178°C) compared to copolymers (i.e., 167°C). Due to the heat generated by rolling and rolling friction, a homopolymer was chosen because it has better thermal and oxidative stability than a copolymer. Additionally, long term fatigue resistance, creep resistance, bearing properties and chemical resistance are improved via the use of a homopolymer in the stead of a copolymer.

The present disclosure includes a method for installing the tire 300 on the common outer ring 340. The method includes roughening, for example, sandblasting the exterior surface 344 of the common outer ring 340 with 20 grit Aluminum Oxide and at a pressure of 90 psi (0,62 N/mm²) to obtain a surface roughness of 125 micro inches (3.18 µm) RMS minimum.

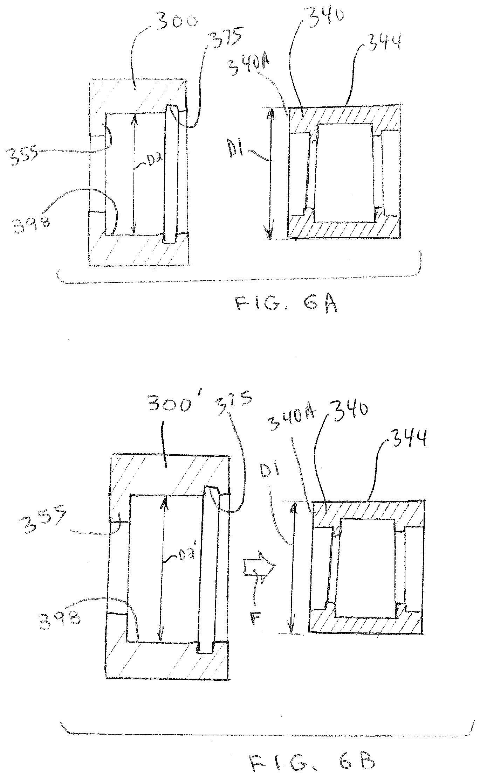

Referring to FIGS. 6A and 6B, the common outer ring 340 has an outside diameter D1 and the tire 300 has an inside diameter D2 having a magnitude less than the outside diameter D1. The tire 300 is heated (as shown in FIG. 6B and designated by 300') to a temperature sufficient to increase the inside diameter to a magnitude D2' (FIG. 6B) greater than the outside diameter D2. The heated tire 300' is fit over the common outer ring 340 in the direction indicated by the arrow F so that the shoulder 355 abuts the axial end 340A. The tire 300 is cooled while positioned on the common outer ring 340 to affect the interference fit of about 0.013 to 0.014 inches (0.33 to 0.36 mm). The retaining ring 385 is positioned in the groove 375 to axially secure the tire 300 to the common inner ring 340. In one embodiment, the exterior surface 310 of the tire 300 is machined to be concentric with the axis A and to achieve a predetermined outside diameter D as shown in FIG. 5.

A cam follower with a bearing assembly according to an embodiment of the invention is shown in FIGS. 2, 9-10, the cam follower for a ram of a necker machine is generally designated by the reference numeral 210. The cam follower 210 is similar to the cam follower 10 of FIG. 1, thus similar elements are designated with similar reference characters preceded by the numeral 2. The cam follower 210 includes a first bearing 230 (e.g., a roller or ball bearing) and a second bearing 260 (e.g., a roller or ball bearing). The first bearing 230 and the second bearing 260 are configured in a tandem configuration; that is, they are side to side. In the embodiment shown, the first bearing 230 and the second bearing 260 abut each other and are coaxial about a first axis of rotation A.

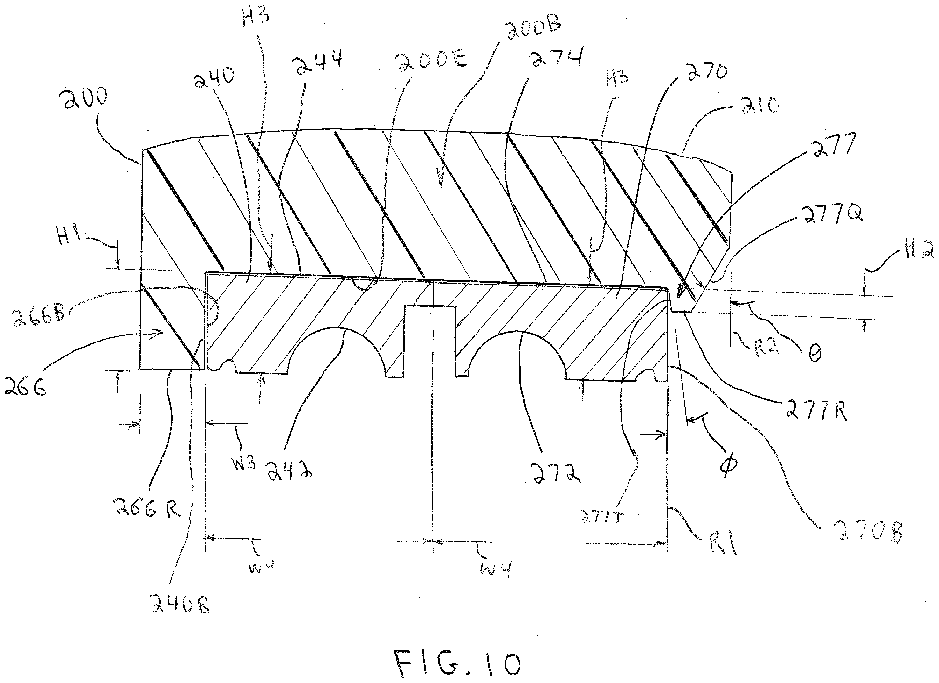

The first bearing 230 comprises a first outer ring 240 having a first outer race 242, also referred to as a bearing surface, and a first exterior surface 244. The first outer ring 240 has an axial width W4 as shown in FIG 10. The first bearing 230 further includes a first inner ring 250 having a first inner race 252, also referred to as a bearing surface. The first inner ring 250 is coaxially disposed in the first outer ring 240. A plurality of balls 254 are disposed between the first outer race 242 and the first inner race 252. The plurality of balls 254 are in rolling engagement with the first outer race 242 and the first inner race 252 so that the first outer ring 240 is rotatable relative to the first inner ring 250 about the first axis of rotation A.

The first bearing 230 comprises an interior set of seals 256 extending radially between the first outer ring 242 and the first inner ring 252 on either side of the first plurality of balls 254. The first bearing 230 further comprises an exterior set of seals 258 extending radially between the first outer ring 240 and the first inner ring 250 axially outside of the interior set of seals 256. The interior and exterior seals 256, 258 are configured to retain a lubricant inside an annular cavity 259 formed between the first outer race 242 and the first inner race 252 in which the first plurality of balls 254 is disposed. In the embodiment shown, the seals 256, 258 comprise a low carbon steel, however, as can be appreciated by a person having ordinary skill in the art and familiar with this disclosure, the seals 256, 258, also referred to as shields, can comprise many different materials, including but not limited to plastic, polymer and composite materials.

In the embodiment disclosed in FIG. 9, the second bearing 260 is similar in configuration to the first bearing 230. The second bearing 260 comprises a second outer ring 270 having a second outer race 272, also referred to as a bearing surface, and a second exterior surface 274. The second outer ring 270 has an axial width W4 as shown in FIG 10. The second bearing 260 further includes a second inner ring 280 having a second inner race 282, also referred to as a bearing surface. The second inner ring 280 is coaxially disposed in the second outer ring 270. A second plurality of balls 284 are disposed between the second outer race 272 and the second inner race 282. The plurality of balls 284 are in rolling engagement with the second outer race 272 and the second inner race 282 so that the second outer ring 270 is rotatable relative to the second inner ring 280 about the first axis of rotation A.

The second ball bearing 260 comprises an interior set of seals 286 extending radially between the second outer ring 272 and the second inner ring 282 on either side of the second plurality of balls 284. The second bearing 260 further comprises an exterior set of seals 288 extending radially between the second outer ring 270 and the second inner ring 282 axially outside of the interior set of seals 286. The seals 286, 288 are configured to retain a lubricant inside an annular cavity 289 formed between the second outer race 272 and the second inner race 282 in which the second plurality of balls 284 are disposed. In the embodiment shown, the seals 286, 288 comprise a low carbon steel, however, as can be appreciated by a person having ordinary skill in the art and being familiar with this disclosure, the seals 286, 288, also referred to as shields, can comprise many different materials, including but not limited to plastic, polymer and composite materials.

In the embodiment shown in FIGS. 2 and 9, the outer rings 240, 270 and the inner rings 250, 280 comprise 52100 steel that is through hardened. The first plurality of balls 254 and the second plurality of balls 284 also comprise 52100 steel. In the embodiment shown, the balls 254, 284 are separated by a cage, as is commonly known in the art (not shown in the FIGS.). The cage comprises low carbon soft steel. It should be understood that the present invention is not limited to a cage, since different spacers, or no spacers, may be employed between the balls in the first plurality of balls 254 and the second plurality of balls 284. It should also be understood that the present invention is not limited to balls, since other types of rolling elements may be employed with the present invention, for example, needle rollers.
Although specific materials are disclosed herein, a person of ordinary skill in the art and familiar with this disclosure will understand that the present invention is not limited in this regard, and that other materials may be used with the present invention.

In reference to FIGS. 2 and 9, the first inner ring 250 comprises a first bore 251 extending therethrough, and the second inner ring 280 comprises a second bore 281 extending therethrough. A shaft 290 is received through the first bore 251 and the second bore 281. In the embodiment shown in FIGS. 2 and 9, the shaft 290 is press-fit in the first bore 251 and the second bore 281 so that the first inner ring 250 and the second inner ring 280 are fixed relative to the shaft about the first axis of rotation A. The shaft 290, also referred to as a stud, extends between a first end 291 and a second end 296. The first bearing 230 and the second bearing 260 are received on the shaft 290 proximate to the first end 291 thereof. The shaft comprises a shoulder 292 projecting radially from the shaft between the first end 291 and the second end 296. After the second bearing 260 is received on the shaft 290 the second inner ring 280 abuts the shoulder 292 to inhibit axial movement of the bearings 230, 260 relative to the shaft 290. After the bearings 230, 260 are disposed on the shaft 290 and the second inner ring abuts the shoulder 292, a retainer ring 293 is fixedly received on the shaft 290 in a groove 299 proximate to the first end 291 so the first bearing 230 and the second bearing 260 are disposed axially between the retainer ring 293 and the shoulder 292 to thereby inhibit axial movement of the bearings relative to the shaft 290.

The shaft 290 includes a face 294 at the first end 291 perpendicular to the first axis of rotation A. The face 294 comprises a recessed hexagonal socket 295 configured to receive a hex wrench (or the like) for rotating the shaft 290 about the first axis of rotation A. The shaft 290 further includes a plurality of threads 297 on a radial outside surface of the shaft 290. In this way, the shaft 290 can be received in a bore (not shown in the FIGS. 2 and 9) comprising a complementary thread pattern, or can similarly be received in a nut or the like having a complementary thread pattern.

The first bearing 230 and the second bearing 260 are received in a tire 200 (e.g., an annular tire). The tire 200 has an outside surface 210. The outside surface 210 is crowned (e.g., is arcuate) and engages the cam (not shown in FIGS. 2 and 9) during operating of the necker. The first exterior surface 244 and the second exterior surface 274 are substantially cylindrical and define a first diameter D1 as shown on FIG, 2. The tire 200 has a radially inward facing surface 200E that is cylindrical (e.g., uniform) and defines a second diameter D2 as shown in FIG. 2. The first diameter D1 is greater than the second diameter D2 so that the tire 200 is expanded over the first exterior surface 244 and the second exterior surface 274. Thus, the tire 200 is press fit over the first exterior surface 244 and the second exterior surface 274 and radially compresses against the first exterior surface 244 and the second exterior surface 274 to prevent axial movement of the first outer ring 240 and the second outer ring 270 relative to the tire 200.

As shown in FIGS. 9-11, the tire 200 includes an elongate body portion 200B that extends between a first radially inward projecting shoulder 266 and a second radially inward projecting shoulder 277 proximate to opposing axial ends of the tire 200 (e.g., each adjoining the respective one of the opposing axial ends of the tire 200). The radially inward facing surface 200E extends between the first radially inward projecting shoulder 266 and the second radially inward projecting shoulder 277. In one embodiment, the tire is manufactured from thermoplastic material. In one embodiment, the thermoplastic material is an acetal homopolymer material. In one embodiment, the tire 200 is manufactured from a composite material. In one embodiment, the composite material is an acetal homopolymer. In one embodiment, the tire 200 is manufactured from a nylon material.

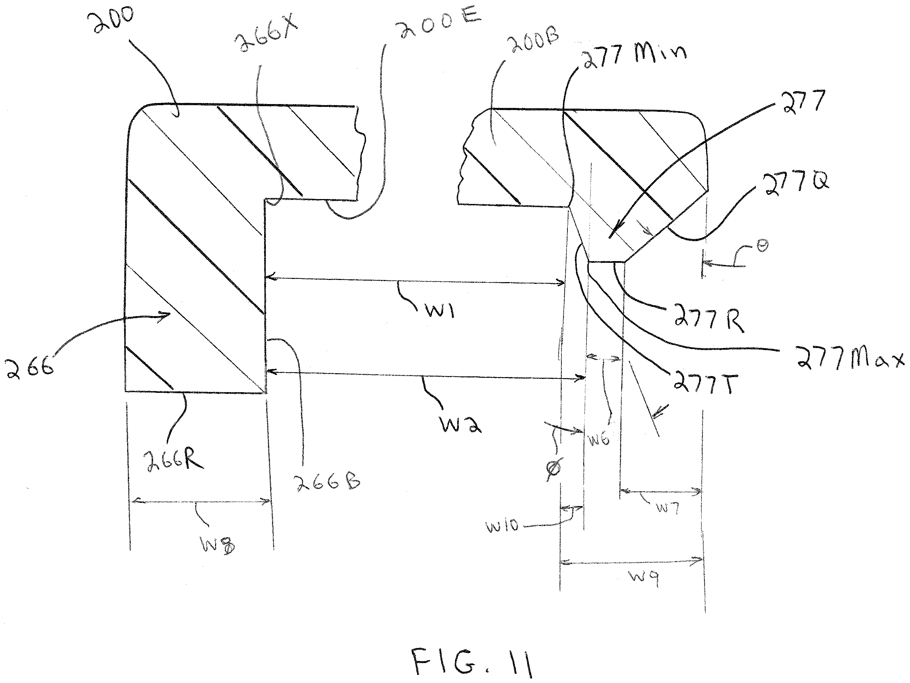

The first radially inward projecting shoulder 266 extends a first length H1 radially inward from the radially inward facing surface 200E to a radial edge 266R. In one embodiment, the first length H1 is about equal to an annular thickness H3 of the outer ring 240 and the outer ring 270. The first radially inward projecting shoulder 266 has an axially inwardly facing abutment surface 266B that abuts an axial end 240B of the first outer ring 240. As shown in FIG. 11, the first radially projecting shoulder 266 has an axial width W8.

As best shown in FIG. 10, the second shoulder 277 extends and slopes a second length H2 radially inward and axially outward from the radially inward facing surface 200E to a radially inner edge 277R. As shown in FIG. 11, the radially inner edge 277R has an axial width W6 and the second radially projecting shoulder 277 has an overall axial width W9.

The second length H2 is less than the annular thickness H3 of the outer ring 240 and the outer ring 270 and in accordance with the invention less than the first length H1. In one embodiment, the second length H2 is less than about 25 percent of the first length H1. In one embodiment, the second length H2 is less than about 15 percent of the first length H1. In one embodiment, the second length H2 is less than about 5 percent of the first length H1.

In one embodiment, the second length H2 is less than about 25 percent of the annular thickness H3. In one embodiment, the second length H2 is less than about 15 percent of the annular thickness H3. In one embodiment, the second length H2 is less than about 5 percent of the annular thickness H3.

The second radially inward projecting shoulder 277 has an inwardly facing sloped abutment surface 277T. A portion of the inwardly facing sloped abutment surface 277T abuts a portion of an axial end 270B of the second outer ring 240. The inwardly facing sloped abutment surface 277T is sloped at an angle Ø measured away from (e.g., axially outwardly away) a radial line R1. In one embodiment, the angle Ø is between 0.5 and 1.5 degrees. In one embodiment, the angle Ø is between 0.8 and 1.2 degrees. In one embodiment, the angle Ø is between 0.9 and 1.1 degrees. In one embodiment, the angle Ø is between 1.9 and 2.0 degrees. In one embodiment, the angle Ø is between 0.5 and 2.5 degrees. In one embodiment, the angle Ø is less than 5 degrees. The inwardly facing sloped abutment surface 277T has an axial width W10.

The second shoulder 277 has an outwardly facing sloped relief surface 277Q that is sloped at an angle θ measured away from (e.g., axially inwardly away) a radial line R2. In one embodiment, the angle θ is between about 40 and 50 degrees. In one embodiment, the angle θ is between about 50 and 60 degrees. In one embodiment, the angle θ is between about 30 and 40 degrees. In one embodiment, the angle θ is between about 30 and 60 degrees. As shown in FIG. 11, the outwardly facing sloped relief surface 277Q has an axial width W7.

As shown in FIG. 11, the radially inward facing surface 200E has a first width W1 measured between: 1) a first junction 266X of the axially inward facing abutment surface 266B and the radially inward facing surface 200E; and 2) a second junction 277Min between the inwardly facing sloped abutment surface 277T and the radially inward facing surface 200E. The tire 200 defines a second width W2 measured between: 1) the axially inward facing abutment surface 266B; and 2) a third junction 277Max between the inwardly facing sloped abutment surface 277T and the radially inner edge 277R.

The inventors have surprisingly discovered that the inwardly facing sloped abutment surface 277T has utility in reducing or eliminating axial movement of the first outer ring 240 and the second outer ring 270 relative to the tire 200 by compensating for stack-up tolerances. For example, if the sum of the axial widths W4 of the first outer ring 240 and the second outer ring 270 is less than the width W2, the first outer ring 240 and the second outer ring 270 will still engage a portion of the inwardly facing sloped abutment surface 277T and axially compress the first outer ring 240 and the second outer ring 270 between the inwardly facing sloped abutment surface 277T and the axially inwardly facing abutment surface 266B. Thus, the inwardly facing sloped abutment surface 277T accommodates undersized combined widths W4 of the first outer ring 240 and the second outer ring 270, of about the axial width W10 of the inwardly facing sloped abutment surface 277T, as illustrated collectively in FIGS. 10 and 11.

The inventors have also surprisingly discovered that the second radially inward projecting shoulder 277 has utility in the installation by press fitting of the first outer ring 240 and the second outer ring 270 into the tire 200. For example, the second length H2 is of a predetermined magnitude to allow radially outward deflection of the second radially inward projecting shoulder 277 to allow the first outer ring 240 and the second outer ring 270 to be pressed axially into the tire 200 without the need for special tools. The outwardly facing sloped relief surface 277Q and the axial width W7 thereof are configured to facilitate entry of the first outer ring 240 and the second outer ring 270 into the tire 200 and to provide sufficient support to maintain axial compression of the first outer ring 240 and the second outer ring 270 between the inwardly facing sloped abutment surface 277T and the axially inwardly facing abutment surface 266B.

While the present disclosure has been described with reference to illustrative and exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the scope thereof. Therefore, it is intended that the invention not be limited to the particular embodiment disclosed as the best mode contemplated for carrying out this invention, but that the invention will include all embodiments falling within the scope of the appended claims.

## Claims

1. A bearing assembly for a cam follower assembly (210) for a ram assembly for a metal can production necker, the bearing comprising:
at least two bearings (230, 260), each bearing comprising:
an inner ring (250, 280) positioned within an outer ring (240, 270) and a plurality of rolling elements (254, 284) positioned therebetween;
a tire (200) press fit on the outer rings (240, 270) of the at least two bearings (230, 260), the tire (200) comprising an elongate body portion (200B) that extends between a first radially inward projecting shoulder (266) and a second radially inward projecting shoulder (277), a radially inward facing surface (200E) extending between the first radially inward projecting shoulder (266) and the second radially inward projecting shoulder (277), and the first radially inward projecting shoulder (266) extending further radially inward than the second radially inward projecting shoulder (277), wherein the second radially inward projecting shoulder (277) comprises an inwardly facing sloped abutment surface (277T).

2. The bearing assembly of claim 1, wherein the inwardly facing sloped abutment surface (277T) is defined by a first angle (Ø) measured axially outwardly away from a radial line (R1) perpendicular to a longitudinal axis (A) of the bearing assembly, wherein the first angle (Ø) is less than 5 degrees.

3. The bearing assembly of claim 1, wherein the outer rings (240, 270) of the at least two bearings (230, 260)
are axially compressed between the first radially inward projecting shoulder (266) and the second radially inward projecting shoulder (277).

4. The bearing assembly of claim 1, wherein the second radially inward projecting shoulder (277) comprises an outwardly facing sloped relief surface (277Q).

5. The bearing assembly of claim 1, wherein the second radially inward projecting shoulder (277) defines a radially inner edge (277R) and extends and slopes radial inward to the radially inner edge (277R) a radial length (H2) less than an annular thickness (H3) of the outer rings (240, 270).

6. The bearing assembly of claim 1, wherein the tire (200) is manufactured from a thermoplastic material.

7. The bearing assembly of claim 6, wherein the thermoplastic material is an acetal homopolymer.

8. The bearing assembly of claim 1, wherein the tire (200) is manufactured from a nylon material.

9. A cam follower assembly (210) for a ram assembly for a metal can production necker, the cam follower assembly (210) comprising a bearing assembly according to any one of the preceding claims.

## Patentansprüche

1. Lagerbaugruppe für eine Nockenstößelbaugruppe (210) für eine Stößelbaugruppe für einen Metalldosenherstellungs-Necker, wobei das Lager umfasst:
wenigstens zwei Lager (230, 260), wobei jedes Lager umfasst:
einen Innenring (250, 280), der innerhalb eines Außenrings (240, 270) angeordnet ist, und eine Mehrzahl von Rollelementen (254, 284), die dazwischen angeordnet sind;
einen Reifen (200), der straff auf den Außenringen (240, 270) der wenigstens zwei Lager (230, 260) sitzt, wobei der Reifen (200) einen lang gestreckten Körperabschnitt (200B) umfasst, der sich zwischen einem ersten radial nach innen vorstehenden Ansatz (266) und einem zweiten radial nach innen vorstehenden Ansatz (277) erstreckt, wobei eine radial nach innen weisende Fläche (200E) sich zwischen dem ersten radial nach innen vorstehenden Ansatz (266) und dem zweiten radial nach innen vorstehenden Ansatz (277) erstreckt und der erste radial nach innen vorstehende Ansatz (266) sich weiter radial nach innen erstreckt als der zweite radial nach innen vorstehende Ansatz (277), wobei der zweite radial nach innen vorstehende Ansatz (277) eine nach innen weisende schräge Anlagefläche (277T) umfasst.

2. Lagerbaugruppe nach Anspruch 1, wobei die nach innen weisende schräge Anlagefläche (277T) durch einen ersten Winkel (Ø) definiert wird, der radial nach außen, weg von einer Radiallinie (R1), die rechtwinklig zu einer Längsachse (A) der Lagerbaugruppe ist, gemessen wird, wobei der erste Winkel (Ø) kleiner als 5 Grad ist.

3. Lagerbaugruppe nach Anspruch 1, wobei die Außenringe (240, 270) der wenigstens zwei Lager (230, 260) zwischen dem ersten radial nach innen vorstehenden Ansatz (266) und dem zweiten radial nach innen vorstehenden Ansatz (277) axial zusammengedrückt werden.

4. Lagerbaugruppe nach Anspruch 1, wobei der zweite radial nach innen vorstehende Ansatz (277) eine nach außen weisende schräge Entlastungsfläche (277Q) umfasst.

5. Lagerbaugruppe nach Anspruch 1, wobei der zweite radial nach innen vorstehende Ansatz (277) einen radial inneren Rand (277R) definiert und sich über eine radiale Länge (H2), die kleiner als eine Ringdicke (H3) der Außenringe (240, 270) ist, schräg verlaufend radial nach innen zu dem radial inneren Rand (277R) erstreckt.

6. Lagerbaugruppe nach Anspruch 1, wobei der Reifen (200) aus einem thermoplastischen Material hergestellt ist.

7. Lagerbaugruppe nach Anspruch 6, wobei das thermoplastische Material ein Acetalhomopolymer ist.

8. Lagerbaugruppe nach Anspruch 1, wobei der Reifen (200) aus einem Nylonmaterial hergestellt ist.

9. Nockenstößelbaugruppe (210) für eine Stößelbaugruppe für einen Metalldosenherstellungs-Necker, wobei die Nockenstößelbaugruppe (210) eine Lagerbaugruppe nach einem der vorangehenden Ansprüche umfasst.

## Revendications

1. Ensemble de roulement pour un ensemble de suiveur de came (210) pour un ensemble de piston pour un collet de production de boîte en métal, le roulement comprenant :
au moins deux roulements (230, 260), chaque roulement comprenant :
une bague intérieure (250, 280) positionnée à l'intérieur d'une bague extérieure (240, 270) et une pluralité d'éléments roulants (254, 284) positionnés entre elles ;
un pneumatique (200) ajusté par pression sur les bagues extérieures (240, 270) des au moins deux roulements (230, 260), le pneumatique (200) comprenant une partie de corps allongée (200B) qui s'étend entre un premier épaulement faisant saillie radialement vers l'intérieur (266) et un second épaulement faisant saillie radialement vers l'intérieur (277), une surface orientée radialement vers l'intérieur (200E) s'étendant entre le premier épaulement faisant saillie radialement vers l'intérieur (266) et le second épaulement faisant saillie radialement vers l'intérieur (277), et le premier épaulement faisant saillie radialement vers l'intérieur (266) s'étendant plus radialement vers l'intérieur que le second épaulement faisant saillie radialement vers l'intérieur (277), le second épaulement faisant saillie radialement vers l'intérieur (277) comprenant une surface de butée inclinée orientée vers l'intérieur (277T).

2. Ensemble de roulement selon la revendication 1, dans lequel la surface de butée inclinée orientée vers l'intérieur (277T) est définie par un premier angle (Ø) mesuré axialement vers l'extérieur par rapport à une ligne radiale (R1) perpendiculaire à un axe longitudinal (A) de l'ensemble de roulement, dans lequel le premier angle (Ø) est inférieur à 5 degrés.

3. Ensemble de roulement selon la revendication 1, dans lequel les bagues extérieures (240, 270) des au moins deux roulements (230, 260) sont comprimées axialement entre le premier épaulement faisant saillie radialement vers l'intérieur (266) et le second épaulement faisant saillie radialement vers l'intérieur (277).

4. Ensemble de roulement selon la revendication 1, dans lequel le second épaulement faisant saillie radialement vers l'intérieur (277) comprend une surface en relief inclinée orientée vers l'extérieur (277Q).

5. Ensemble de roulement selon la revendication 1, dans lequel le second épaulement faisant saillie radialement vers l'intérieur (277) définit un bord radialement intérieur (277R) et s'étend et s'incline radialement vers l'intérieur du bord radialement intérieur (277R) sur une longueur radiale (H2) inférieure à une épaisseur annulaire (H3) des bagues extérieures (240, 270).

6. Ensemble de roulement selon la revendication 1, dans lequel le pneumatique (200) est fabriqué à partir d'un matériau thermoplastique.

7. Ensemble de roulement selon la revendication 6, dans lequel le matériau thermoplastique est un homopolymère d'acétal.

8. Ensemble de roulement selon la revendication 1, dans lequel le pneumatique (200) est fabriqué à partir d'un matériau en nylon.

9. Ensemble de suiveur de came (210) pour un ensemble de piston pour un collet de production de boîte en métal, l'ensemble de suiveur de came (210) comprenant un ensemble de roulement selon l'une quelconque des revendications précédentes.
